# EUROPEAN PATENT SPECIFICATION

(11) **EP 0 490 455 B1**
(45) Date of publication and mention of the grant of the patent: **08.10.1997**
(21) Application number: 91203260.4
(22) Date of filing: 03.12.1991
(51) Int. Cl.: G06K 19/07, G07F 7/12, G07F 7/10

(54) **Method and apparatus for interfacing smart cards with terminals**
Verfahren und Vorrichtung zum Bilden einer Schnittstelle zwischen Chipkarten und Endgeräten
Méthode et dispositif pour faire l'interface entre cartes à puce et terminaux

(30) Priority: 10.12.1990 EP 90403540
(43) Date of publication of application: 17.06.1992
(73) Proprietor: THOMSON multimedia, 92400 Courbevoie (FR)
(72) Inventor: Diehl, Eric, Ing., F-67100 Strasbourg (FR)
(74) Representative: Einsel, Robert, Dipl.-Ing.

(56) References cited:
- EP-A- 0 138 386
- EP-A- 0 216 298
- EP-A- 0 379 333
- EP-A- 0 421 409
- EP-B- 0 168 836
- GB-B- 2 140 179
- US-A- 4 065 662
- US-A- 4 392 207

## Description

The present invention relates to a method and to a **system** for interfacing smart cards with any terminal.

### Background

The use of smart card devices is growing quickly. The memory capacity and the features of such smart cards, like those of other electronic components, are increasing exponentially. Therefore a terminal with a card reader designed today will hardly be able to follow future evolution of smart cards.

### Invention

It is an object of the present invention to disclose a method of using different smart cards with any terminal.

The method of the invention is defined in claim 1.

Advantageous additional embodiments of the inventive method are described in subclaims 2 to 4.

It is a further object of the present invention to disclose a **system** for the inventive method.

The **system** of the invention is defined in claim 5.

The invention uses a process which allows efficient use of the smart card capacities by actual terminals. This process is based on the following architecture:
A terminal equipped with a display, a pointing device (e.g. a keyboard), a smart card reader and a smart card which is likely to be changed in future are combined together. The terminal must have the following capacities which are quite normal:
- to display a list of actions which will be described in ASCII characters;
- to select actions;
- to enter key sequences;
- to display messages and clear them afterwards.

A communication protocol between the smart card and the terminal is implemented in the terminal comprising the following commands:
a) issued by the smart card
   - SEND ACTION LIST: the smart card sends to the terminal a list of actions;
   - SEND KEY SEQUENCE: asks the terminal to request the user to enter an information;
   - DISPLAY MESSAGE: requires the terminal to display a message;
   - DISPLAY ERASABLE MESSAGE: like command DISPLAY MESSAGE but the user will initiate the message clearing.
b) issued by the terminal:
   - ACTION LIST REQUEST: the terminal asks the smart card to send a list of actions;
   - ACTION SELECTED: the terminal returns to the smart card data of the action selected by the user;
   - KEY SEQUENCE: the terminal sends to the smart card a key sequence;
   - END OF CLEAR: the terminal informs the smart card that the command DISPLAY ERASABLE MESSAGE and/or a command CLEAR SCREEN have been finished.

The above mentioned command names are examples and may be changed. The function of these commands is essential.

### Drawing

Preferred embodiments of the invention will now be described with reference to the accompanying drawing, in which:

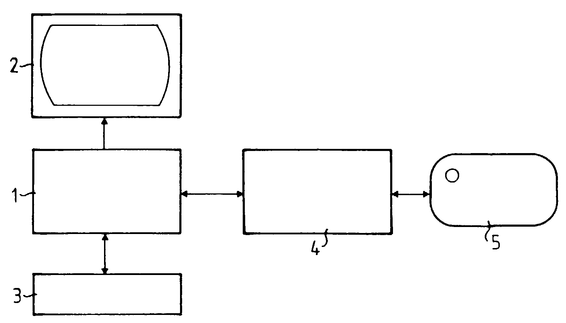

- Fig. 1: shows a terminal combined with a smart card read er.

### Preferred embodiments

A terminal 1 is equipped with display means 2, one or more pointing devices 3 such as e.g. keyboard or mouse, a smart card reader 4 and a smart card 5. The terminal 1 may be equipped with a specific user interface based on different policies, for instance displaying pop-up menus or drawing keys on a touch sensitive display. All these user interfaces have the above mentioned capacities.
A communication protocol between the smart card and the terminal comprising the following or additional commands is implemented in the terminals:
a) issued by the card:
   - SEND ACTION LIST: the smart card will send to the terminal a list of actions. Each action will be constituted by a number identifying the action, a length byte and the name of the action written in ASCII characters. In answer to that message the terminal will display the list of actions and wait until the user has selected one. After that it will send the command ACTION SELECTED.
   - SEND KEY SEQUENCE: asks the terminal to request the user to enter an information. The parameters are e.g. the number of expected characters, masks for the permitted characters (for instance only 0-9), some texts to be displayed in order to explain something to the user.
   - DISPLAY MESSAGE: requires the terminal to display a message and waits for the next action performed by the smart card.
   - DISPLAY ERASABLE MESSAGE: Identical to DISPLAY MESSAGE but the user will initiate the message clearing.
   - CLEAR SCREEN: the whole display shall be cleared.
   - END OF SESSION:
b) issued by the terminal:
   - ACTION LIST REQUEST: the terminal will ask the smart card to send a list of possible actions.
   - ACTION SELECTED: the terminal will return to the smart card a number identifying the action selected by the user.
   - KEY SEQUENCE: the terminal will send to the smart card a key sequence.
   - END OF CLEAR: the terminal will inform the smart card that the actions DISPLAY ERASABLE MESSAGE and/or CLEAR SCREEN have been finished.

By using this protocol any smart card emulating the protocol will be able to interface itself with any terminal emulating the same protocol whatever its user interface is. Advantageously the smart card will be able to perform through the terminal actions which were not defined when the terminal was created. The terminal will follow technological progresses of smart cards.

Advantageously terminals with different user interfaces may use the same smart card. That can be useful in case of terminals belonging to different services but sharing the same smart card, for instance in PAY TV where each program provider has its own personalized decoder but is able to use the smart cards of the other providers, or for GIE ("Groupement d'interêt économique") like in banking.

Advantageously the protocol also allows delivering of different type of cards being able to perform more or different actions (something similar to the CB VISA and the PREMIER CB).

## Claims

1. A method for interfacing smart cards with terminals, whereby a smart cart (5) is connected by a smart card reader (4) to a terminal (1) and whereby said terminal is provided with display means(2) and with at least one pointing device (3), said method comprising the following steps:
- first, said terminal (1) sends to said smart card (5) first data which cause said smart card to send a list of different actions to said terminal (1);
- in reply to said first data said smart card (5) sends to said terminal (1) second data containing said list of said actions;
- in reply to said second data said terminal (1) sends to said smart card (5) third data identifying an action selected by a user from said list in said second data;
- said smart card (5) sends to said terminal (1) fourth data which request said user to enter an information using said pointing device (3);
- said terminal (1) sends to said smart card (5) fifth data identifying a key sequence entered by the user;
- said smart card (5) sends to said terminal (1) sixth data identifying a message to be displayed on said display means and commanding said terminal to wait for the next action performed by said smart card, or sends to said terminal (1) seventh data identifying a message to be displayed on said display means and commanding said terminal to wait for the clearing of said message by said user;
- said terminal (1) sends to said smart card (5) eigth data identifying that said user has cleared said message and/or said whole display means (2);
- said smart card (5) sends to said terminal (1) ninth data which cause said terminal to clear said display means (2);
- said smart card (5) sends to said terminal (1) tenth data identifying the end of the session.

2. The method according to claim 1, characterized in that said second data contain numbers identifying said different actions, a byte identifying the length of each of said actions and ASCII characters identifying the name of each of said actions.

3. The method according to claim 1 or 2, characterized in that said fourth data contain numbers of expected characters and/or masks of permitted characters and/or messages which explain something to said user.

4. The method according to anyone of claims 1 to 3 , characterized in that said third data contain a number identifying the kind of said action selected by said user.

5. A system for applying the method of any of claims 1 to 4, said system comprising a terminal (1), display means (2), one or more pointing devices (3), a card reader (4) and a smart card (5), characterised in that
said terminal having means for sending the following commands to said smart card:
- first data which cause said smart card to send a list of different actions to said terminal (1);
- third data identifying an action selected by a user from said list in said second data;
- fifth data identifying a key sequence entered by the user;
- eighth data identifying that said user has cleared said message and/or the whole of said display means (2);
and said smart card having means for sending the following commands to said terminal:
- second data containing said list of said actions;
- fourth data which request said user to enter an information using said pointing device (3);
- sixth data identifying a message to be displayed on said display means and commanding said terminal to wait for the next action performed by said smart card;
- seventh data identifying a message to be displayed on said display means and commanding said terminal to wait for the clearing of said message by said user;
- ninth data which cause said terminal to clear said display means (2);
- tenth data identifying the end of a session;
said terminal having means for receiving and executing said commands from said smart card,
and said smart card having means for receiving and executing said commands from said terminal.

## Patentansprüche

1. Verfahren zum Bilden einer Schnittstelle zwischen Chipkarten und Endgeräten, wobei eine Chipkarte (5) über einen Chipkarten-Leser (4) mit einem Endgerät (1) verbunden ist und das Endgerät mit Wiedergabemitteln (2) und mit wenigstens einer Eingabeeinheit (3) versehen ist, wobei das Verfahren die folgenden Schritte enthält:
- zunächst sendet das Endgerät (1) zu der Chipkarte (5) erste Daten, die die Chipkarte veranlassen, eine Liste von verschiedenen Vorgängen an das Endgerät (1) zu senden;
- in Antwort auf die ersten Daten sendet die Chipkarte (5) an das Endgerät (1) zweite Daten, die die Liste der Vorgänge enthalten;
- als Antwort auf die zweiten Daten sendet das Endgerät (1) an die Chipkarte (5) dritte Daten, die einen Vorgang identifizieren, der durch den Benutzer aus der Liste in den zweiten Daten ausgewählt wurde;
- die Chipkarte (5) sendet an das Endgerät (1) vierte Daten, die den Benutzer bitten, eine Information unter Verwendung der Eingabeeinheit (3) einzugeben;
- das Endgerät (1) sendet an die Chipkarte (5) fünfte Daten, die eine durch den Benutzer eingegebene Schlüsselfolge identifizieren;
- die Chipkarte (5) sendet an das Endgerät (1) sechste Daten, die eine auf den Wiedergabemitteln wiederzugebende Nachricht identifiziern, und die das Endgerät auffordern, auf den nächsten durch die Chipkarte ausgeführten Vorgang zu warten, oder die Chipkarte (5) sendet an das Endgerät (1) siebte Daten, die eine auf den Wiedergabemitteln wiederzugebende Nachricht identifizieren und die das Endgerät auffordern, auf das Löschen der Nachricht durch den Benutzer zu warten;
- das Endgerät (1) sendet an die Chipkarte (5) achte Daten, die identifizieren, daß der Benutzer die Nachricht und/oder die gesammten Wiedergabemittel (2) gelöscht hat;
- die Chipkarte (5) sendet an das Endgerät (1) neunte Daten, die das Endgerät veranlassen, die Wiedergabemittel (2) zu löschen;
- die Chipkarte (5) sendet an das Endgerät (1) zehnte Daten, die das Ende der Sitzung identifizieren.

2. Verfahren nach Anspruch 1,
dadurch gekennzeichnet, daß
die zweiten Daten die verschiedenen Vorgänge identifizierende Ziffern, ein die Länge jedes der Vorgänge identifizierendes Byte und den Namen jeder der Vorgänge identifizierende ASCII Schriftzeichen enthalten.

3. Verfahren nach Anspruch 1 oder 2,
dadurch gekennzeichnet, daß
die vierten Daten die Ziffern von erwarteten Schriftzeichen und/oder Masken von zugelassenen Schriftzeichen und/oder Nachrichten enthalten, die dem Benutzer etwas erklären.

4. Verfahren nach einem der Ansprüche 1 bis 3,
dadurch gekennzeichnet, daß
die dritten Daten eine Ziffer enthalten, die die Art des durch den Benutzer ausgewählten Vorganges identifizieren.

5. System zur Anwendung des Verfahrens nach einem der Ansprüche 1 bis 4, wobei das System ein Endgerät (1), Wiedergabemittel (2), ein oder mehrere Eingabeeinheiten (3), einen Kartenleser (4) und eine Chipkarte (5) enthalten,
dadurch gekennzeichnet, daß
das Endgerät Mittel zum Senden der folgenden Befehle an die Chipkarte aufweist:
- erste Daten, die die Chipkarte veranlassen, eine Liste von verschiedenen Vorgängen an das Endgerät (1) zu senden;
- dritte Daten, die einen Vorgang identifizieren, der durch einen Benutzer aus der Liste in den zweiten Daten ausgewählt wurde;
- fünfte Daten, die eine von dem Benutzer eingegebene Schlüsselfolge identifizieren;
- achte Daten, die identifizieren, daß der Benutzer die Nachricht und/oder die Gesamtheit der Wiedergabemittel (2) gelöscht hat;
und daß die Chipkarte Mittel zum Senden der folgenden Befehle an das Endgerät aufweist:
- zweite Daten, die die Liste der Vorgänge enthalten;
- vierte Daten, die den Benutzer bitten, eine Information unter Verwendung der Eingabeeinheit (3) einzugeben;
- sechste Daten, die eine auf den Wiedergabemitteln wiederzugebende Nachricht identifizieren und das Endgerät auffordern, auf den nächsten durch die Chipkarte durchzuführenden Vorgang zu warten;
- siebte Daten, die eine auf den Wiedergabemitteln wiederzugebende Nachricht identifiziern und das Endgerät auffordern, auf die Löschung der Nachricht durch den Benutzer zu warten;
- neunte Daten, die das Endgerät veranlassen, die Wiedergabemittel (2) zu löschen;
- zehnte Daten, die das Ende der Sitzung identifizieren;
wobei das Endgerät Mittel zum Empfangen und Ausführen der Befehle von der Chipkarte aufweist,
und die Chipkarte Mittel zum Empfangen und Ausführen der Befehle von dem Endgerät aufweist.

## Revendications

1. Méthode d'interfaçage de cartes à puce avec des terminaux, par laquelle une carte à puce (5) est connectée par un lecteur de cartes à puce (4) à un terminal (1) et par lequel ledit terminal est équipé d'un moyen d'affichage (2) et avec au moins un dispositif de pointage (3), ledit procédé comprenant les étapes suivantes:
- en premier lieu, ledit terminal (1) envoie à ladite carte à puce (5) des premières données qui forcent ladite carte à puce à envoyer une liste d'actions différentes audit terminal (1);
- en réponse auxdites premières données ladite carte à puce (5) envoie audit terminal (1) des deuxièmes données contenant ladite liste desdites actions;
- en réponse auxdites deuxièmes données ledit terminal (1) envoie à ladite carte à puce (5) des troisièmes données identifiant une action sélectionnée par un utilisateur dans ladite liste dans lesdites deuxièmes données;
- ladite carte à puce (5) envoie audit terminal (1) des quatrièmes données qui demandent audit utilisateur d'entrer une information en utilisant ledit dispositif de pointage (3);
- ledit terminal (1) envoie à ladite carte intelligente (5) des cinquièmes données identifiant une séquence de frappe entrée par l'utilisateur;
- ladite carte à puce (5) envoie audit terminal (1) des sixièmes données identifiant un message à afficher sur ledit moyen d'affichage et commandant audit terminal d'attendre l'action suivante exécutée par ladite carte à puce, ou envoie audit terminal (1) des septièmes données identifiant un message à afficher sur ledit moyen d'affichage et commandant audit terminal d'attendre l'effacement dudit message par ledit utilisateur;
- ledit terminal (1) envoie à ladite carte à puce (5) des huitièmes données identifiant que ledit utilisateur a effacé ledit message et/ou ledit moyen d'affichage complet (2);
- ladite carte à puce (5) envoie audit terminal (1) des neuvièmes données qui forcent ledit terminal à effacer ledit moyen d'affichage (2);
- ladite carte à puce (5) envoie audit terminal (1) des dixièmes données identifiant la fin de la session.

2. Méthode selon la revendication 1, caractérisée en ce que lesdites deuxièmes données contiennent des nombres identifiant lesdites actions différentes, un octet identifiant la longueur de chacune desdites actions et des caractères ASCII identifiant le nom de chacune desdites actions.

3. Méthode selon la revendication 1 ou 2, caractérisée en ce que lesdites quatrièmes données contiennent des nombres de caractères attendus et/ou des masques de caractères autorisés et/ou des messages qui expliquent quelque chose audit utilisateur.

4. Méthode selon l'une quelconque des revendications 1 à 3, caractérisée en ce que lesdites troisièmes données contiennent un nombre identifiant le type de ladite action sélectionnée par ledit utilisateur.

5. Système d'application de la méthode de l'une quelconque des revendications 1 à 4, ledit système comprenant un terminal (1), un moyen d'affichage (2), un ou plusieurs dispositifs de pointage (3), un lecteur de carte (4) et une carte à puce (5), caractérisé en ce que
ledit terminal a des moyens pour envoyer les commandes suivantes à ladite carte à puce:
- des premières données qui forcent ladite carte à puce à envoyer une liste d'actions différentes audit terminal (1);
- des troisièmes données identifiant une action sélectionnée par un utilisateur dans ladite liste dans lesdites deuxièmes données;
- des cinquièmes données identifiant une séquence de frappe entrée par l'utilisateur;
- des huitièmes données identifiant que ledit utilisateur a effacé ledit message et/ou la totalité dudit moyen d'affichage (2);
et ladite carte à puce ayant des moyens pour envoyer les commandes suivantes audit terminal:
- des deuxièmes données contenant ladite liste desdites actions;
- des quatrièmes données qui demandent audit utilisateur d'entrer une information en utilisant ledit dispositif de pointage (3);
- des sixièmes données identifiant un message à afficher sur ledit moyen d'affichage et commandant audit terminal d'attendre l'action suivante exécutée par ladite carte à puce;
- des septièmes données identifiant un message à afficher sur ledit moyen d'affichage et commandant audit terminal d'attendre l'effacement dudit message par ledit utilisateur;
- des neuvièmes données qui forcent ledit terminal à effacer ledit moyen d'affichage (2);
- des dixièmes données identifiant la fin d'une session;
ledit terminal ayant un moyen pour recevoir et exécuter lesdites commandes provenant de ladite carte à puce,
et ladite carte à puce ayant un moyen pour recevoir et exécuter lesdites commandes provenant dudit terminal.
